# EUROPÄISCHE PATENTSCHRIFT

(11) **EP 1 085 055 B1**
(45) Veröffentlichungstag und Bekanntmachung des Hinweises auf die Patenterteilung: **20.10.2004**
(21) Anmeldenummer: 00810819.3
(22) Anmeldetag: 12.09.2000
(51) Int. Cl.: C09B 29/085, C09B 29/01

(54) **Azofarbstoff, Verfahren zu dessen Herstellung und dessen Verwendung zum Färben oder Bedrucken von hydrophoben Fasermaterialien**
Azo dye, process for its preparation and its use for dyeing or printing hydrophobic fibre materials
Colorant azoique, procédé pour sa préparation et son utilisation pour la teinture ou l'impression de matériaux fibreux

(30) Priorität: 20.09.1999 EP 99810836
(43) Veröffentlichungstag der Anmeldung: 21.03.2001
(73) Patentinhaber: Ciba Specialty Chemicals Holding Inc., 4057 Basel (CH)
(72) Erfinder: Dreier, Romeo, 4232 Fehren (CH); Wilhelm, Jean-Claude, 68220 Knoeringue (FR); Arquint, Alfons, 4058 Basel (CH); Lauk, Urs, 8047 Zürich (CH)

(56) Entgegenhaltungen:
- CH-A- 468 444
- DE-A- 2 364 205
- FR-A- 1 291 988
- JP-A- 49 030 417
- US-A- 2 891 942
- US-A- 2 941 992
- US-A- 3 407 189
- CHEMICAL ABSTRACTS, vol. 82, no. 26, 30. Juni 1975 (1975-06-30) Columbus, Ohio, US; abstract no. 172578d, GANDEL'SMAN L.Z. ET AL.: "Disperse azo dyes containing fluorine" Seite 87; XP002129891 & UKR. KHIM. ZH. (RUSS. ED.), Bd. 41, Nr. 1, 1975, Seiten 61-6, XP000874681 Kiev
- E. HOYER ET AL.: "Sterische Hinderung bei stark polaren 2,6-disubstituierten Azobenzolen" ANGEWANDTE CHEMIE., Bd. 85, Nr. 22, 1973, Seiten 984-5, XP002129890 VCH VERLAGSGESELLSCHAFT, WEINHEIM., DE ISSN: 0044-8249

## Beschreibung

Die vorliegende Erfindung betrifft einen Azofarbstoff, seine Herstellung und seine Verwendung zum Färben oder Bedrucken von halbsynthetischen oder synthetischen hydrophoben Fasermaterialien.

Azofarbstoffe und ihre Verwendung zum Färben von halbsynthetischen oder synthetischen hydrophoben Fasermaterialien sind bekannt.

Im U.S. Patent 2 941 992 werden wasserunlösliche Azofarbstoffe offenbart, die aus halogenoder cyanosubstituierten 4-Nitroanilinen und N-Bis-(cyanoethyl)-aminobenzolen als Kupplungskomponenten hergestellt werden.

Ähnliche Azofarbstoffe basierend auf 2-Trifluormethyl-4-nitroanilinen als Aminkomponente werden in der DE-A 2 364 205 beschrieben.

Es hat sich jedoch gezeigt, dass diese Farbstoffe den höchsten Ansprüchen, insbesondere im Bezug auf die Heisslichtechtheit und/oder Farbstärke, nicht immer vollauf genügen. Es besteht daher Bedarf nach neuen Farbstoffen, welche heisslichtechtechte, farbstarke Färbungen oder Drucke ergeben und gute allgemeine Echtheiten zeigen.

Es wurde nun überraschenderweise gefunden, dass der erfindungsgemässe Farbstoff die oben angegebenen Kriterien weitgehend erfüllt.

Gegenstand der vorliegenden Erfindung ist somit der Farbstoff der Formel 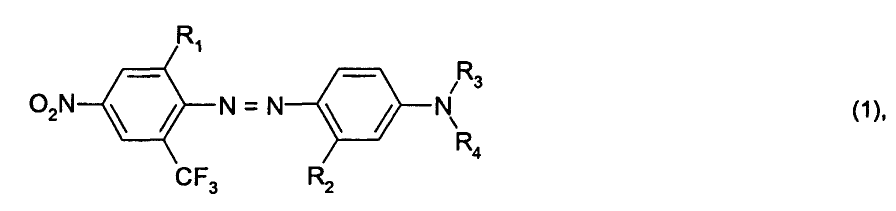 worin
R₁ Brom,
R₂ Wasserstoff,
R₃ und R₄ Cyanoethyl bedeuten.

Einen weiteren Gegenstand der vorliegenden Erfindung stellt das Verfahren zur Herstellung des erfindungsgemässen Farbstoffs der Formel (1) dar.

Diese wird beispielsweise so hergestellt, indem man die Verbindung der Formel 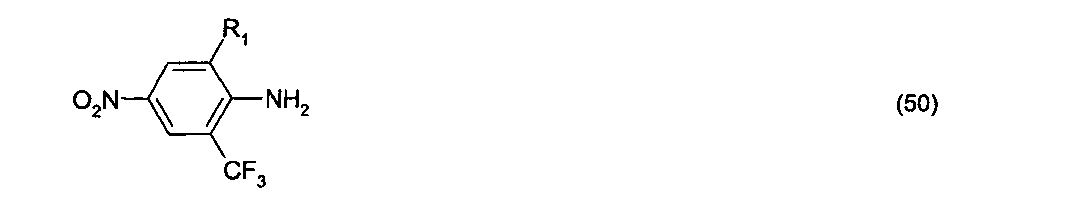 nach einem üblichen Verfahren diazotiert und anschliessend an die Kupplungskomponente der Formel 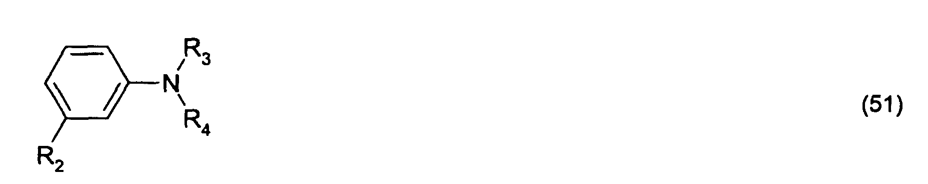 kuppelt, wobei R₁, R₂, R₃ und R₄ die vorderhand angegebenen Bedeutungen haben.

Die Diazotierung der Verbindung der Formel (50) erfolgt in an sich bekannter Weise, z.B. mit Natriumnitrit in saurem, z.B. salzsaurem oder schwefelsaurem, wässrigem Medium. Die Diazotierung kann aber auch mit anderen Diazotierungsmitteln, z.B. mit Nitrosylschwefelsäure ausgeführt werden. Bei der Diazotierung kann eine zusätzliche Säure im Reaktionsmedium anwesend sein, z.B. Phosphorsäure, Schwefelsäure, Essigsäure, Propionsäure, Salzsäure oder Mischungen dieser Säuren, z.B. Mischungen aus Propionsäure und Essigsäure. Zweckmässig wird die Diazotierung bei Temperaturen von -10 bis 30°C, z.B. von -10°C bis Raumtemperatur, durchgeführt.

Die Kupplung der diazotierten Verbindung der Formel (50) auf die Kupplungskomponente der Formel (51) erfolgt ebenfalls in bekannter Weise, beispielsweise in saurem, wässrigem oder wässrig- organischem Medium, vorteilhaft bei Temperaturen von -10 bis 30°C, insbesondere unter 10°C. Als Säuren verwendet man z.B. Salzsäure, Essigsäure, Propionsäure, Schwefelsäure oder Phosphorsäure.

Die Verbindung der Formel (50) ist bekannt oder kann auf an sich bekannte Art und Weise hergestellt werden.
Die Kupplungskomponente der Formel (51) ist bekannt oder kann auf an sich bekannte Art und Weise hergestellt werden.

Der erfindungsgemässe Farbstoff kann zum Färben und Bedrucken von halbsynthetischen und insbesondere synthetischen hydrophoben Fasermaterialien, vor allem Textilmaterialien, verwendet werden. Textilmaterialien aus Mischgeweben, die derartige halbsynthetische bzw. synthetische hydrophobe Textilmaterialien enthalten, können ebenfalls mit Hilfe des erfindungsgemässen Farbstoffs gefärbt oder bedruckt werden.

Als halbsynthetische Textilmaterialien kommen vor allem Cellulose 2¹/₂-Acetat und Cellulosetriacetat in Frage.

Synthetische hydrophobe Textilmaterialien bestehen vor allem aus linearen, aromatischen Polyestern, beispielsweise solchen aus Terephthalsäure und Glykolen, besonders Ethylenglykol oder Kondensationsprodukten aus Terephthalsäure und 1,4-Bis-(hydroxymethyl)-cyclohexan; aus Polycarbonaten, z.B. solchen aus α,α-Dimethyl-4,4-dihydroxy-diphenylmethan und Phosgen, aus Fasern auf Polyvinylchlorid- sowie Polyamid-Basis.

Die Applikation des erfindungsgemässen Farbstoffs auf die Textilmaterialien erfolgt nach bekannten Färbeverfahren. Beispielsweise färbt man Polyesterfasermaterialien im Ausziehverfahren aus wässriger Dispersion in Gegenwart von üblichen anionischen oder nicht-ionischen Dispergiermitteln und gegebenenfalls üblichen Quellmitteln (Carrier) bei Temperaturen zwischen 80 und 140°C. Cellulose-2¹/₂ -acetat färbt man vorzugsweise zwischen ungefähr 65 bis 85°C und Cellulosetriacetat bei Temperaturen bis zu 115°C.

Der erfindungsgemässe Farbstoff färbt im Färbebad gleichzeitig anwesende Wolle und Baumwolle nicht oder nur wenig an (sehr gute Reserve), so dass er auch gut zum Färben von Polyester/Wolle- und Polyester/Cellulosefaser-Mischgeweben verwendet werden kann.

Der erfindungsgemässe Farbstoff eignet sich zum Färben nach dem Thermosolverfahren, im Auszieh- und Continueverfahren und für Druckverfahren. Das Ausziehverfahren ist bevorzugt. Das Flottenverhältnis ist von den apparativen Gegebenheiten, vom Substrat und der Aufmachungsform abhängig. Es kann jedoch innerhalb eines weiten Bereiches gewählt werden, z.B. 1:4 bis 1:100, liegt aber vorzugsweise zwischen 1:6 bis 1:25.

Das genannte Textilmaterial kann dabei in den verschiedenen Verarbeitungsformen vorliegen, wie z.B. als Faser, Faden oder Vlies, als Gewebe oder Gewirke.

Es ist vorteilhaft, den erfindungsgemässen Farbstoff vor seiner Verwendung in ein Farbstoffpräparat zu überführen. Hierzu wird der Farbstoff vermahlen, so dass seine Teilchengrösse im Mittel zwischen 0,1 und 10 Mikron beträgt. Das Vermahlen kann in Gegenwart von Dispergiermitteln erfolgen. Beispielsweise wird der getrocknete Farbstoff mit einem Dispergiermittel gemahlen oder in Pastenform mit einem Dispergiermittel geknetet und hierauf im Vakuum oder durch Zerstäuben getrocknet. Mit den so erhaltenen Präparaten kann man nach Zugabe von Wasser Druckpasten und Färbebäder herstellen.

Beim Bedrucken wird man die üblichen Verdickungsmittel verwenden, z.B. modifizierte oder nichtmodifizierte natürliche Produkte, beispielsweise Alginate, British-Gummi, Gummi arabicum, Kristallgummi, Johannisbrotkernmehl, Tragant, Carboxymethylcellulose, Hydroxyethylcellulose, Stärke oder synthetische Produkte, beispielsweise Polyacrylamide, Polyacrylsäure oder deren Copolymere oder Polyvinylalkohole.

Der erfindungsgemässe Farbstoff verleiht den genannten Materialien, vor allem dem Polyestermaterial, egale Farbtöne von sehr guten Gebrauchsechtheiten, wie vor allem gute Lichtechtheit, insbesondere eine sehr gute Heisslichtechtheit, Thermofixier-, Plissier-, Chlorund Nassechtheit wie Wasser- Schweiss- und Waschechtheit; die Ausfärbungen sind ferner gekennzeichnet durch eine gute Reibechtheitechtheit.

Der erfindungsgemässe Farbstoff kann auch gut verwendet werden zur Herstellung von Mischnuancen zusammen mit anderen Farbstoffen.
Insbesondere kann der erfindungsgemässe Farbstoff als geeignete Komponente in einer Trichromie Färbe- oder Drucktechnik eingesetzt werden.

Ausserdem eignet sich der erfindungsgemässe Farbstoff auch gut zum Färben von hydrophobem Textilmaterial aus überkritischem CO₂.

Die vorstehend genannte Verwendung des erfindungsgemässen Farbstoffs stellt ebenso einen Gegenstand der vorliegenden Erfindung dar wie ein Verfahren zum Färben oder Bedrucken von halbsynthetischem oder synthetischem hydrophobem Fasermaterial, insbesondere Textilmaterial, das darin besteht, den erfindungsgemässen Farbstoff auf das genannte Material aufzubringen oder ihn in dieses einzuarbeiten. Das genannte hydrophobe Fasermaterial ist vorzugsweise textiles Polyestermaterial. Weitere Substrate, die durch das erfindungsgemässe Verfahren behandelt werden können, sowie bevorzugte Verfahrensbedingungen sind vorstehend bei der näheren Erläuterung der Verwendung der erfindungsgemässen Farbstoffe zu finden.

Ein weiterer Gegenstand der Erfindung ist das durch das genannte Verfahren gefärbte bzw. bedruckte hydrophobe Fasermaterial, vorzugsweise Polyester-Textilmaterial.

Der erfindungsgemässe Farbstoff eignet sich ausserdem für moderne Aufzeichnungsverfahren, wie z.B. Thermotransfer-Printing.

Das nachfolgende Beispiel dient der Veranschaulichung der Erfindung. Darin sind, sofern nicht anders angegeben, die Teile Gewichtsteile und die Prozente Gewichtsprozente. Die Temperaturen sind in Celsiusgraden angegeben. Die Beziehung zwischen Gewichtsteilen und Volumenteilen ist dieselbe wie zwischen Gramm und Kubikzentimeter.

### Beispiel 1:

A. In einer Laborreaktionsapparatur werden 103,0 g 2-Amino-5-nitro-benzotrifluorid in 625 ml Methanol bei Raumtemperatur gelöst. Anschliessend werden zu dieser Lösung 95,9 g Brom in 250 ml Methanol innerhalb 2 Stunden zugetropft und die Reaktionsmischung weitere 24 Stunden bei Raumtemperatur nachgerührt.
   Danach wird der pH-Wert mit 64 ml einer 30%-igen wässrigen NaOH-Lösung auf 7-8 gestellt, mit 600 ml Wasser verdünnt und das ausgefällte Produkt abgenutscht, mit Wasser gewaschen und bei 60°C im Vakuum getrocknet.
   Man erhält 126,4 g der Verbindung der Formel 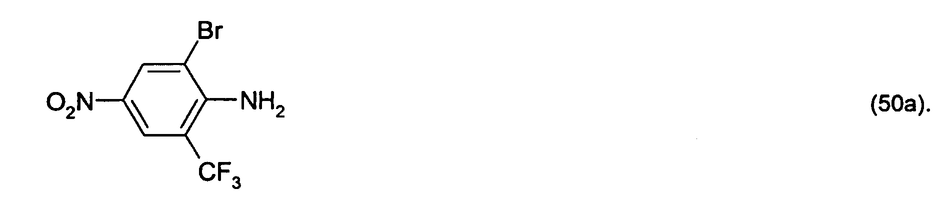
B. In einer Laborreaktionsapparatur werden 57,0 g der Verbindung der Formel (50a) in 100 g einer 97%-igen Schwefelsäure innerhalb von 30 Minuten bei einer Temperatur von 20-30°C eingerührt und anschliessend auf 0°C abgekühlt. Danach werden zu der Reaktionsmasse 65,0 g einer 40%-igen Nitrosylschwefelsäurelösung innerhalb von 30 Minuten bei einer Temperatur zwischen 0 und 5°C zugegeben und 5 Stunden mit einem geringen Nitritüberschuss verrührt. Nach dem Ausreagieren wird der Nitritüberschuss mittels eines 15-minütigen Verrührens mit Sulfaminsäure eliminiert.
C. 39,8 g N,N-Bis(2-cyanoethyl)-anilin werden in 500 g einer 80%-igen Essigsäure während 1 Stunde bei erhöhter Temperatur gelöst. Danach wird die Lösung durch Zugabe von 50 g Eis auf 5°C gekühlt.
   Zu dieser Reaktionsmischung lässt man die unter B. hergestellte Diazotierungsmasse innerhalb 15 Minuten bei einer Temperatur zwischen 0 und 5°C zulaufen. Der resultierte Temperaturanstieg wird durch Zugabe von ca. 200 g Eis korrigiert.
   Nach beendeter Zugabe wird die Reaktionsmischung noch 3 Stunden nachgerührt. Anschliessend wird der entstandene Azofarbstoff mit Wasser ausgefällt, abfiltriert, mehrmals mit Wasser gewaschen und getrocknet.
   Man erhält 96,0 g des Farbstoffes der Formel 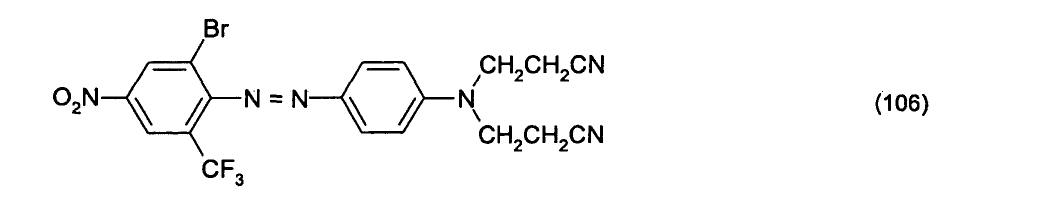 welcher Polyester in einem brillanten orangen Ton färbt.

## Patentansprüche

1. Farbstoff der Formel 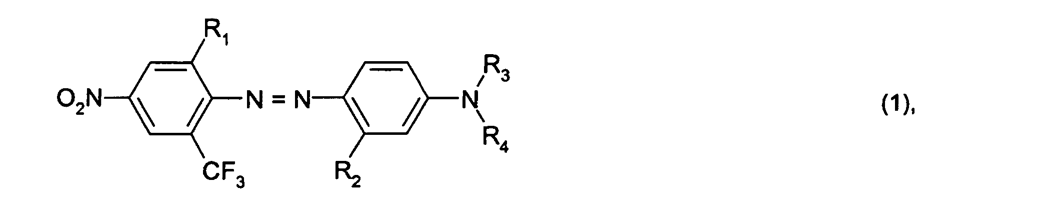 worin
R₁ Brom, R₂ Wasserstoff und R₃ und R₄ 2-Cyanoethyl bedeuten.

2. Verfahren zur Herstellung des Farbstoffs der Formel (1) gemäss Anspruch 1, **dadurch gekennzeichnet, dass** man eine Verbindung der Formel 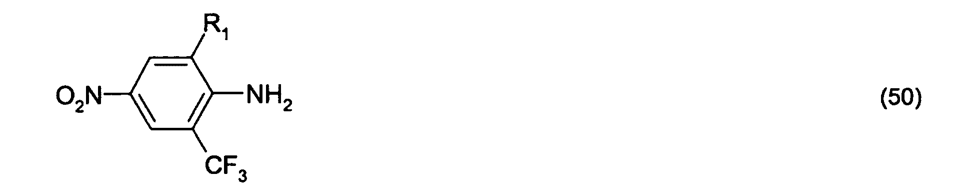 nach einem üblichen Verfahren diazotiert und anschliessend an eine Kupplungskomponente der Formel 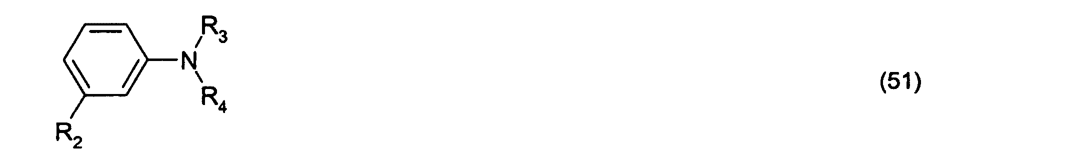 kuppelt, wobei R₁, R₂, R₃ und R₄ die unter der Formel (1) angegebenen Bedeutungen haben.

3. Verwendung des Farbstoffs der Formel (1) gemäss Anspruch 1 zum Färben oder Bedrucken von halbsynthetischen oder synthetischen hydrophoben Fasermaterialien.

4. Die mit dem Farbstoff der Formel (1) gemäss Anspruch 1 gefärbten oder bedruckten halbsynthetischen oder synthetischen hydrophoben Fasermaterialien.

## Claims

1. A dye of formula 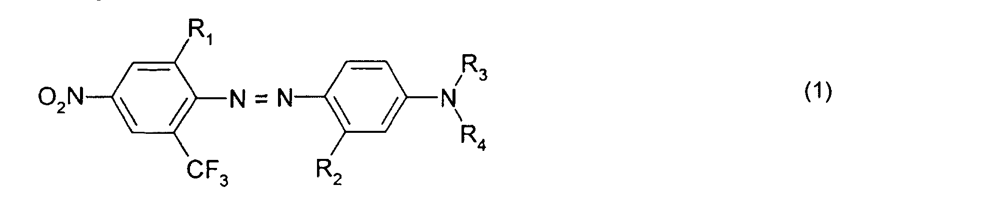 wherein
R₁ is bromine, R₂ is hydrogen, and R₃ and R₄ are 2-cyanoethyl.

2. A process for the preparation of a dye of formula (1) according to claim 1, wherein a compound of formula 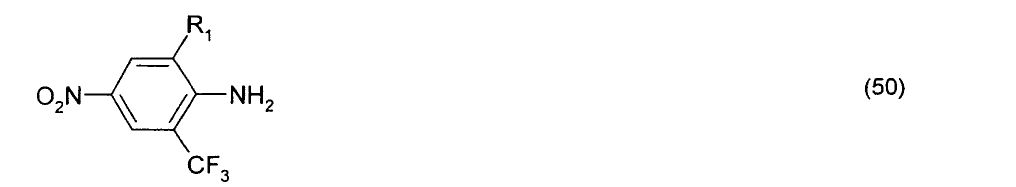 is diazotised in accordance with a customary procedure and then coupled to a coupling component of formula 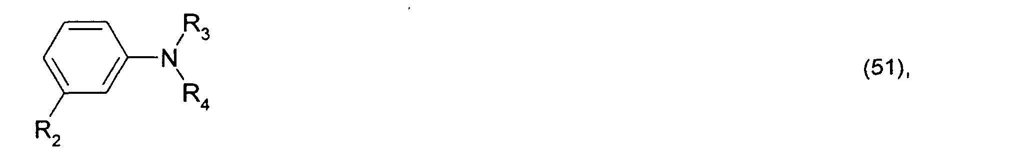 R₁, R₂, R₃ and R₄ being as defined for formula (1).

3. The use of a dye of formula (1) according to claim 1 in the dyeing or printing of semi-synthetic or synthetic hydrophobic fibre materials.

4. A semi-synthetic or synthetic hydrophobic fibre material dyed or printed with a dye of formula (1) according to claim 1.

## Revendications

1. Colorant de formule 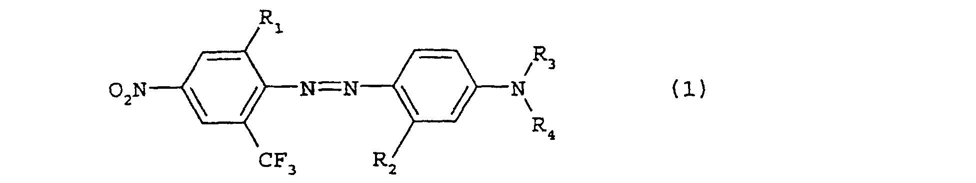 dans laquelle R₁ est le brome, R₂ est un atome d'hydrogène, et R₃ et R₄ sont des groupes 2-cyanoéthyle.

2. Procédé de préparation du colorant de Formule (1) selon la revendication 1, **caractérisé en ce qu'**on soumet à une diazotation par un procédé usuel un composé de formule 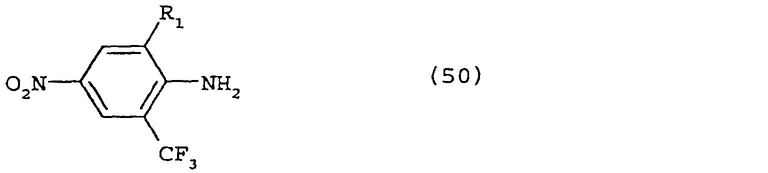 puis on procède à une copulation sur un composant de copulation de formule 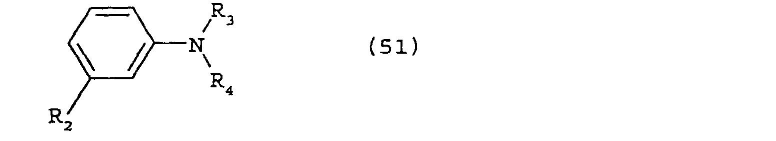 où R₁, R₂, R₃ et R₄ ont les significations données pour la Formule (1).

3. Utilisation du colorant de Formule (1) selon la revendication 1 pour teindre ou imprimer des matériaux fibreux hydrophobes semi-synthétiques ou synthétiques.

4. Les matériaux fibreux hydrophobes semi-synthétiques ou synthétiques, teints ou imprimés par le colorant de Formule (1) selon la revendication 1.
